(19) **Europäisches Patentamt**

**European Patent Office**

**Office européen des brevets**

(11) **EP 1 538 774 A1**

(12) **EUROPÄISCHE PATENTANMELDUNG**

(43) Veröffentlichungstag:
**08.06.2005 Patentblatt 2005/23**

(51) Int Cl.⁷: **H04L 5/14**, H04L 25/03

(21) Anmeldenummer: 03027734.7

(22) Anmeldetag: **02.12.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT 80333 München (DE)**

(72) Erfinder:
- **Baier, Paul Walter, Prof. 67661 Kaiserslautern (DE)**
- **Meurer, Michael 67663 Kaiserslautern (DE)**
- **Qiu, Wei 67663 Kaiserslautern (DE)**
- **Weber, Tobias 67731 Otterbach (DE)**

(54) **Verfahren zum Betrieb einer sendenden Station in einem Funkkommunikationssystem sowie Sendevorrichtung**

(57) Bei einem Verfahren zum Betrieb einer sendenden Station (NodeB) in einem Funkkommunikationssystem sieht die sendende Station (NodeB) wenigstens drei Informationseinheiten ($\underline{c}$) zum gleichzeitigen Senden an wenigstens eine empfangende Station (UE_1, ..., UE_K) über wenigstens einen Übertragungskanal vor. Die sendende Station (NodeB) verfügt über eine Information, der entnehmbar ist, welches Demodulationsverfahren ($\underline{D}^{(1)}$, ..., $\underline{D}^{(K)}$) die empfangende Station (UE_1, ..., UE_K) für Empfangssignale verwendet, welche Zuordnungsvorschrift (ZV) die empfangende Station (UE_1, ..., UE_K) verwendet, um einem Empfangssignal eine Informationseinheit ($\underline{\hat{c}}^{(1)}_{dis}$, ..., $\underline{\hat{c}}^{(K)}_{dis}$) zuzuordnen, und welche Übertragungseigenschaften ($\underline{H}^{(k)}$) der Übertragungskanal hat. Weiterhin teilt die sendende Station (NodeB) die wenigstens drei Informationseinheiten ($\underline{c}$) in wenigstens zwei Gruppen (B1, B2, ..., BK) ein, wobei wenigstens eine der Gruppen mehr als eine Informationseinheit enthält. Für jede Gruppe (B1, B2, ..., BK) ermittelt die sendende Station (NodeB) unter Berücksichtigung der Information ($\underline{D}^{(1)}$, ..., $\underline{D}^{(K)}$, ZV, $\underline{H}^{(k)}$) ein Teilsendesignal und bildet ein Gesamtsendesignal ($\underline{t}^{(R)}$) aus den Teilsendesignalen, das sie an die wenigstens eine empfangende Station (UE_1, ..., UE_K) sendet.

## FIG 9

EP 1 538 774 A1

**Beschreibung**

Die Erfindung betrifft ein Verfahren zum Betrieb einer sendenden Station in einem Funkkommunikationssystem sowie eine entsprechende Sendevorrichtung.

Bei Funkübertragungen zwischen einer sendenden Station und empfangenden Stationen eines Funkkommunikationssystems kommt es infolge von Frequenzselektivität der Übertragungskanäle zu Interferenzerscheinungen, die als Intersymbol-Interferenz (ISI: Inter Symbol Interference) und Vielfachzugriffsinterferenz (MAI: Multi Access Interference) bekannt sind.

Herkömmlicherweise arbeiten Funkkommunikationssysteme senderorientiert, d.h. es werden Sendesignale an der sendenden Station ohne Berücksichtigung der wirksamen Übertragungskanäle (Funkkanäle) generiert. Die bei einer Funkübertragung nachfolgend auftretenden Interferenzerscheinungen werden in einem weiteren Schritt zumindest näherungsweise durch entsprechend angepasste und im allgemeinen aufwendige Verfahren zum Detektieren der übertragenden Daten an der empfangenden Station beseitigt.

In den letzten Jahren haben empfängerorientierte Konzepte wie z.B. Joint Predistortion und Joint Transmission Aufmerksamkeit auf sich gezogen. Derartige Konzepte eliminieren beim Generieren der Sendesignale an der sendenden Station durch Berücksichtigen der wirksamen Übertragungskanäle die Interferenzerscheinungen teilweise oder vollständig. Diese zumeist auf linearen Verfahren basierenden Konzepte weisen jedoch einen erheblichen Nachteil auf:

Um eine geforderte Übertragungsqualität einhalten zu können, werden, je nach konkreter Situation aus Übertragungskanal und Empfängereigenschaften, Sendesignale großer Sendeenergien erzeugt. Sendesignale großer Sendeenergien sind jedoch unter anderem aus Energiespargründen, aus Gründen der elektromagnetischen Verträglichkeit und aus Interferenzgründen nicht wünschenswert.

Die Erfindung hat die Aufgabe, ein verbessertes Verfahren zum Betrieb einer sendenden Station in einem Funkkommunikationssystem sowie eine Sendevorrichtung anzugeben, die es ermöglichen, Sendesignale derart zu erzeugen, dass Interferenzerscheinungen teilweise oder vollständig eliminiert werden, während gleichzeitig gegenüber bisher bekannten Verfahren geringere Sendeenergien verwendet werden können.

Die Aufgabe wird mit dem Verfahren sowie der Sendevorrichtung gemäß den unabhängigen Ansprüchen gelöst.

Vorteilhafte Weiterbildungen der Erfindung sind Gegenstand der abhängigen Ansprüche.

Bei dem erfindungsgemäßen Verfahren zum Betrieb einer sendenden Station in einem Funkkommunikationssystem sieht die sendende Station wenigstens drei Informationseinheiten zum gleichzeitigen Senden an wenigstens eine empfangende Station über wenigstens einen Übertragungskanal vor. Weiterhin verfügt die sendende Station über eine Information, der entnehmbar ist, welches Demodulationsverfahren die empfangende Station für Empfangssignale verwendet, welche Zuordnungsvorschrift die empfangende Station verwendet, um einem Empfangssignal eine Informationseinheit zuzuordnen, und welche Übertragungseigenschaften der Übertragungskanal hat. Die sendende Station teilt die wenigstens drei Informationseinheiten erfindungsgemäß in wenigstens zwei Gruppen ein, wobei wenigstens eine der Gruppen mehr als eine Informationseinheit enthält. Unter Berücksichtigung der Information ermittelt die sendende Station für jede Gruppe ein Teilsendesignal und bildet aus den Teilsendesignalen ein Gesamtsendesignal, das sie an die wenigstens eine empfangende Station sendet.

Die Gruppen können durch die Erfindung beispielsweise derart gewählt werden, dass Informationseinheiten, die bei einer einzelnen Übertragung ähnliche Signaturen an der empfangenden Station aufweisen würden, in unterschiedlichen Gruppen bearbeitet werden. Auf diese Weise können für die entsprechenden Informationseinheiten getrennt Teilsendesignale derart gebildet werden, dass eine Verwechslung der Informationseinheiten an der empfangenden Station vermieden werden kann.

Besonders vorteilhaft ist es, wenn die Gruppenbildung eine Zuordnung von Informationseinheiten zu empfangenden Stationen berücksichtigt. Auf diese Weise können die Gruppen bei einem gleichzeitigen Senden an mehrere empfangende Stationen so gebildet werden, dass in einer Gruppe die Informationseinheiten aller empfangenden Stationen enthalten sind, während weitere Gruppen so gebildet werden können, dass in ihnen alle Informationseinheiten abzüglich der Informationseinheiten einer oder mehrerer empfangender Stationen vorhanden sind. Bevorzugt werden die Gruppen so gebildet, dass in einer ersten Gruppe alle Informationseinheiten einer ersten empfangenden Station enthalten sind, in einer zweiten Gruppe alle Informationseinheiten der ersten empfangenden Station und der zweiten empfangenden Station, in einer dritten Gruppe kommt zu den Informationseinheiten der ersten und zweiten empfangenen Station noch die Informationseinheiten einer dritten empfangenden Station hinzu. Diese Vorgehensweise bei der Gruppenbildung wird solange fortgeführt, bis in einer letzten Gruppe schließlich die Informationseinheiten aller empfangenden Stationen enthalten sind. Auf diese Weise kann durch das erfindungsgemäße Verfahren erreicht werden, dass jedes Teilsendesignal einer Gruppe keine Intersymbolinterferenzen für die in der jeweiligen Gruppe enthaltenen Informationseinheiten an den jeweils für den Empfang vorgesehenen empfangenden Stationen erzeugt. Gleichzeitig kann erreicht werden, dass keine Mehrfachzugriffsinterferenzen zwischen den Informationseinheiten einer empfangenden Station einer Gruppe und den Informationseinheiten von anderen empfangenden Stationen auftreten, sofern die anderen empfangenden Stationen aus der gleichen Gruppe oder einer Gruppe mit einer geringeren Anzahl von empfangenden Stationen stammen.

Vorteilhafterweise verwendet die Zuordnungsvorschrift für mindestens eine Informationseinheit wenigstens zwei Gebiete eines Werteraumes, in dem Empfangssignale nach Durchführung des Demodulationsverfahrens liegen.

Nach Durchführung des Demodulationsverfahrens ergibt sich für ein Empfangssignal ein kontinuierlicher Wert, der ohne Interferenzen in einem ersten Gebiet eines Werteraumes liegt, in dem auch eine, durch ein dem Empfangssignal zugehöriges Sendesignal ursprünglich gesendete, diskrete Informationseinheit liegt. Je nach dem, in welchem Gebiet des Werteraumes der kontinuierliche Wert tatsächlich liegt, kann ihm ein diskreter Wert, d. h. eine dem entsprechenden Gebiet zugeordnete Informationseinheit mittels der Zuordnungsvorschrift zugeordnet werden. Interferenzen, die durch Teilsendesignale anderer Gruppen auftreten, können dazu führen, dass der kontinuierliche Wert in einem Gebiet des Werteraumes zu liegen kommt, der nicht der ursprünglich gesendeten Informationseinheit zugeordnet ist. Die Erfindung ermöglicht, dass die Interferenzen anderer Teilsendesignale bereits bei der Erzeugung eines Teilsendesignals durch einen Korrekturwert berücksichtigt werden. Der Korrekturwert bewirkt, dass der durch das Demodulationsverfahren erzeugte kontinuierliche Wert in einem zweiten Gebiet des Werteraumes landet, der ebenso wie das erste Gebiet der ursprünglich gesendeten Informationseinheit zugeordnet ist. Der Korrekturwert wird vorzugsweise so gewählt, dass nur eine minimale zusätzliche Energie benötigt wird, um ihn zu senden. Dies geschieht beispielsweise dadurch, dass der Korrekturwert eine Verschiebung des kontinuierlichen Wertes aus dem durch die Interferenzen festgelegten Gebiet in das nächstgelegene Gebiet bewirkt, das der ursprünglich gesendeten Informationseinheit zugeordnet ist.

Es ist von Vorteil, wenn die Teilsendesignale iterativ ermittelt werden und zum Ermitteln eines Teilsendesignals bei vorhergehenden Iterationsschritten ermittelte Teilsendesignale berücksichtigt werden. Auf diese Weise kann das aktuelle Teilsendesignal optimal durch einen entsprechenden Korrekturwert so festgelegt werden, dass Interferenzen, die durch vorher berechnende Teilsendesignale erzeugt würden, kompensiert werden.

Weiterhin ist es von Vorteil, die Gebiete des Werteraumes aus lückenlos aneinandergrenzenden Sechsecken zu bilden. Auf diese Weise liegt jeder der kontinuierlichen Werte, die Empfangssignale nach Anwenden des Demodulationsverfahren in der empfangenden Station haben, immer innerhalb eines Gebietes, und somit kann dem kontinuierlichen Wert die dem jeweiligen Sechseck entsprechende Informationseinheit zugeordnet werden.

Vorteilhafter Weise werden die Teilsendesignale derart gebildet, dass gegenseitige Interferenzen der jeweils übertragenen Informationseinheiten berücksichtigt werden. Insbesondere können die Teilsendesignale jeweils so gebildet werden, dass die gegenseitigen Interferenzen, die zwischen den Informationseinheiten eines Teilsendesignals üblicherweise auftreten, vermieden werden, insbesondere im Wesentlichen kompensiert werden. Die empfangende Station empfängt die Informationseinheit daher so, als wenn diese in einem Übertragungssystem ohne Intersymbol-Interferenzen übertragen worden wären.

Alternativ oder zusätzlich wird das Gesamtsendesignal derart gebildet, dass gegenseitige Interferenzen der Teilsendesignale berücksichtigt werden. Interferenzen, die aufgrund eines Teilsendesignals beim Empfangen eines anderen Teilsendesignals bei der empfangenden Station auftreten würden, können dadurch im Wesentlichen kompensiert, insbesondere eliminiert werden, dass diese Interferenzen beim Bilden des anderen Teilsendesignals berücksichtigt werden. Werden die Interferenzen aller Teilsendesignale entsprechend berücksichtigt, kann das Gesamtsendesignal, d.h. die mittels des Gesamtsendesignals übertragenen Informationseinheiten, von der empfangenden Station so empfangen werden, als wenn die Übertragung interferenzfrei oder im Wesentlichen interferenzfrei erfolgt wäre.

Vorteilhafterweise signalisiert die sendende Station der wenigstens einen empfangenden Station das zu verwendende Demodulationsverfahren. Der sendenden Station sind üblicherweise die aktuellen Übertragungsbedingungen bekannt, so dass sie entscheiden kann, welches Demodulationsverfahren für eine möglichst interferenzfreie Übertragung besonders geeignet ist. Signalisieren bedeutet dabei, dass die sendende Station der empfangenden Station das entsprechende Demodulationsverfahren entweder explizit vorgibt oder ihr durch eine entsprechende Information signalisiert, welches Demodulationsverfahren die wenigstens eine empfangende Station, beispielsweise aus einer in der empfangenden Station gespeicherten Tabelle, auswählen soll.

Alternativ ist es von Vorteil, wenn der sendenden Station von der wenigstens einen empfangenden Station signalisiert wird, welches Demodulationsverfahren die empfangende Station verwendet. Insbesondere bei einem Verbindungsaufbau, bei dem der sendenden Station die Eigenschaften der empfangenden Station möglicherweise noch nicht vollständig bekannt sind, ist es günstig, wenn die empfangende Station das Demodulationsverfahren selbst vorgibt.

Mit Vorteil kann die Erfindung derart eingesetzt werden, dass die sendende Station und/oder die empfangende Station jeweils eine Antennenvorrichtung mit zumindest zwei Antennen verwenden. Das erfindungsgemäße Verfahren kann so beispielsweise in MIMO-Systemen (Multiple Input Multiple Output) verwendet werden.

Die erfindungsgemäße Sendevorrichtung weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

Die Erfindung wird im Folgenden anhand von den in Figuren dargestellten Ausführungsbeispielen näher erläutert. Es zeigen:

Fig. 1   eine schematische Darstellung eines ersten erfindungsgemäßen Funkkommunikationssystems,

Fig. 2   eine schematische Darstellung einer erfindungsgemäßen Einteilung eines Werteraumes in 3-fach zusammenhängende Gebiete sowie die Zuordnung von Informationseinheiten zu Gebieten,

Fig. 3   eine schematische Darstellung einer erfindungsgemäßen Zuordnung von Repräsentanten zu den Gebieten gemäß Figur 2,

Fig. 4   eine schematische Darstellung einer erfindungsgemäßen Gruppenbildung für Elemente einer Realisierung eines Datenvektors,

Fig. 5   eine schematische Darstellung von erfindungsgemäßen Modulationsmatrizen zum Bilden von Teilsendesignalen,

Fig. 6   eine schematische Darstellung einer erfindungsgemäßen Verwendung von Elementen eines partiellen Korrekturvektors zur Eliminierung von Interferenzen im Werteraum gemäß Figur 3,

Fig. 7   eine Darstellung einer Vektorschreibweise von zwei erfindungsgemäßen partiellen Korrekturvektoren,

Fig. 8   ein Nassi-Shneiderman Diagramm, das ein erfindungsgemäßes iteratives Verfahren zum Erzeugen eines Gesamtsendesignals schrittweise beschreibt,

Fig. 9   eine schematische Darstellung eines zweiten erfindungsgemäßen Funkkommunikationssystems und

Fig. 10  eine schematische Darstellung einer hexagonalen Aufteilung des Werteraumes in Gebiete mit jeweils einem Repräsentanten.

Gleiche Bezugszeichen in den Figuren bezeichnen gleiche Gegenstände.

Eine empfangende Station ist beispielsweise ein Mobiltelefon oder auch eine ortsbewegliche oder ortsfeste Vorrichtung zur Übertragung von Bild- und/oder Tondaten, zum Fax-, Short Message Service SMS und/oder Email-Versand und/oder zum Internetzugang. Nachfolgend wird eine empfangende Station als Mobilstation bezeichnet, ohne jedoch damit zum Ausdruck bringen zu wollen, dass die Erfindung hierauf beschränkt sein soll.

Eine sendende Station ist beispielsweise eine Basisstation eines Funkkommunikationssystems, die Daten aus dem Funknetz an Mobilstationen überträgt. Selbstverständlich kann es sich bei einer sendenden Station auch um eine Mobilstation handeln. Nachfolgend wird als sendende Station eine Basisstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen einen Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- (Global System for Mobil Communications) oder dem UMTS-(Universal Mobile Telecommunications System) Standard. Auch zukünftige Mobilfunksysteme, beispielsweise der vierten Generation, sowie Adhoc-Netze sollen unter Funkkommunikationssystemen verstanden werden.

Funkkommunikatiossystem in denen die Erfindung eingesetzt werden kann, verwenden beispielsweise folgende Verfahren: DS-CDMA (Direct Sequence-Code Division Multiple Access), MC-CDMA (Multi Carrierer-CDMA) oder OFDM (Orthogonal Frequency Division Multiplex).

Die Funkkommunikationssystem können dabei folgenden Klassen entstammen: SISO (Single Input Single Output), SIMO (Single Input Multiple Output), MISO (Multiple Input Single Output) und MIMO (Multiple Input Multiple Output).

Die Erfindung kann mit Vorteil sowohl in Punkt-zu-Punkt (Point-to-Point) als auch in Punkt-zu-Mehrpunkt (Point-to-Multipoint) Szenarien eingesetzt werden.

Im Folgenden werden zunächst allgemeine Grundlagen zur Informationsübertragung in einem ersten Funkkommunikationssystem beschrieben, auf die bei der nachfolgenden detaillierten Beschreibung der Erfindung Bezug genommen wird.

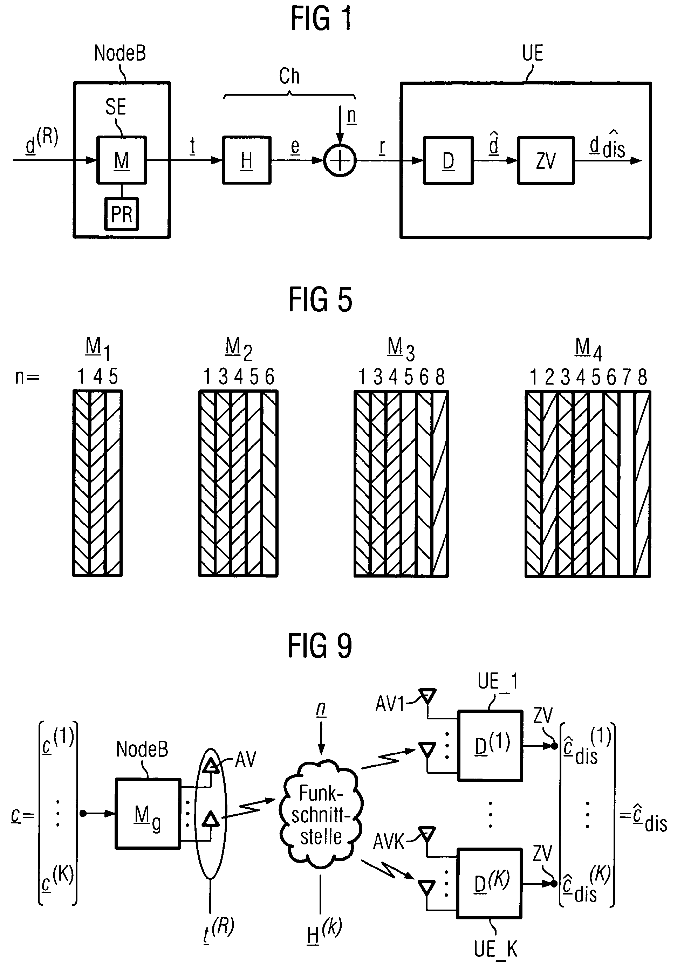

Figur 1 zeigt schematisch die Struktur des ersten Funkkommunikationssystems, das aus einer sendenden Station NodeB, einem Übertragungskanal Ch und wenigstens einer empfangenden Station UE besteht.

Eine Realisierung $\underline{d}^{(R)}$ eines aus N Elementen bestehenden Datenvektors $\underline{d}$

$$\underline{d} = (\underline{d}_1 \ldots \underline{d}_N)^\mathsf{T}$$

wird der sendenden Station NodeB, die nachfolgend als Basisstation NodeB bezeichnet wird, zugeführt und muss zur empfangenden Station UE, die nachfolgend als Mobilstation UE bezeichnet wird, übertragen werden. Selbstverständlich gelten die nachfolgenden Ausführungen analog auch für eine Übertragung an mehrere Mobilstationen.

Den N Elementen $\underline{d}_n$, n = 1 ... N, des Datenvektors $\underline{d}$ können Informationseinheiten aus einer endlichen Menge $\mathbb{V}$ mit Kardinalität M zugeordnet werden

$$\mathbb{V} = \{\underline{v}_1 \ldots \underline{v}_M\}$$

Die Menge $\mathbb{V}$ kann in der komplexen Ebene durch M Punkte $\underline{v}_m$, m = 1 ... M dargestellt werden. Der Datenvektor $\underline{d}$ kann somit $M^N$ unterschiedliche Realisierungen (engl.: realizations) annehmen, d.h. $M^N$ unterschiedliche Kombinationen der Informationseinheiten aus der Menge $\mathbb{V}$ ..

$$\underline{d}^{(R)} = (\underline{d}_1^{(R)} \ldots \underline{d}_N^{(R)}) \cdot R = 1 \ldots M^N$$

In Figur 1 ist die Übertragung einer speziellen Realisierung $\underline{d}^{(R)}$ von $\underline{d}$ dargestellt. Übertragen wird von einer Sendeeinheit SE der Basisstation NodeB ein Sendesignal $\underline{t}$, das mathematisch betrachtet aus der Realisierung $\underline{d}^{(R)}$ durch Multiplikation mit einer Modulationsmatrix $\underline{\mathbf{M}}$ erzeugt wird.

$$\underline{t} = \underline{\mathbf{M}} \cdot \underline{d}^{(R)}$$

Gesteuert wird das Erzeugen des Sendesignals $\underline{t}$ durch einen mit der Sendeeinheit SE verbundenen Prozessor PR.

Das Sendesignal $\underline{t}$ wird über den Übertragungskanal Ch übertragen. Dies entspricht mathematisch der Multiplikation des Sendesignals $\underline{t}$ mit einer Kanalmatrix $\underline{\mathbf{H}}$, die die Übertragungseigenschaften des ungestörten Übertragungskanals beschreibt. Auf diese Weise entsteht bei der Übertragung des Sendesignals $\underline{t}$ ein ungestörtes Signal $\underline{e}$

$$\underline{e} = \underline{\mathbf{H}}\,\underline{t} \in \mathbb{C}^{Z \times 1}$$

dem noch ein in realen Übertragungskanälen immer vorhandenes. Rauschen $\mathbf{n}$ hinzukommt. $\mathbb{C}$ ist hier die Menge der komplexen Zahlen.

Von der Mobilstation UE wird somit ein Empfangssignal $\underline{r}$ empfangen, das durch folgende Formel beschrieben werden kann:

$$\underline{r} = \underline{e} + \underline{n} = \underline{\mathbf{H}}\,\underline{t} + \underline{n} \in \mathbb{C}^{Z \times 1} \quad .$$

In der Mobilstation UE wird das Empfangssignal $\underline{r}$ mit einem Demodulationsverfahren demoduliert, d.h. mathematisch betrachtet mit einer Demodulationsmatrix $\underline{\mathbf{D}}$ multipliziert. Das Ergebnis ist ein Schätzvektor $\underline{\hat{d}}$ für die ursprünglich gesendete Realisierung $\underline{d}^{(R)}$ des Datenvektors $\underline{d}$. Die Elemente des Schätzvektors $\underline{\hat{d}}$ haben jedoch keine diskreten sondern kontinuierliche Werte aus der Menge der komplexen Zahlen $\mathbb{C}$.

$$\hat{\underline{d}} = \underline{D}(\underline{r}) = (\hat{d}_1 \dots \hat{d}_N)^{\mathsf{T}}$$

Der Schätzvektor $\hat{\underline{d}}$ wird mittels eines so genannten Quantisierers, d.h. mittels einer Zuordnungsvorschrift ZV bearbeitet, die jedem kontinuierlichen Wert eine der diskreten Informationseinheiten, d.h. einen diskreten Wert, aus der Menge $\mathbb{V}$ zuordnet. Jeder Informationseinheit aus $\mathbb{V}$ ist wenigstens ein Gebiet in der komplexen Ebene zugeordnet, so dass den Elementen des komplexen Schätzvektors $\underline{d}$, je nach dem, in welchem Gebiet der komplexen Ebene sie liegen, durch die Zuordnungsvorschrift ZV die entsprechende Informationseinheit aus $\mathbb{V}$ zugeordnet wird.

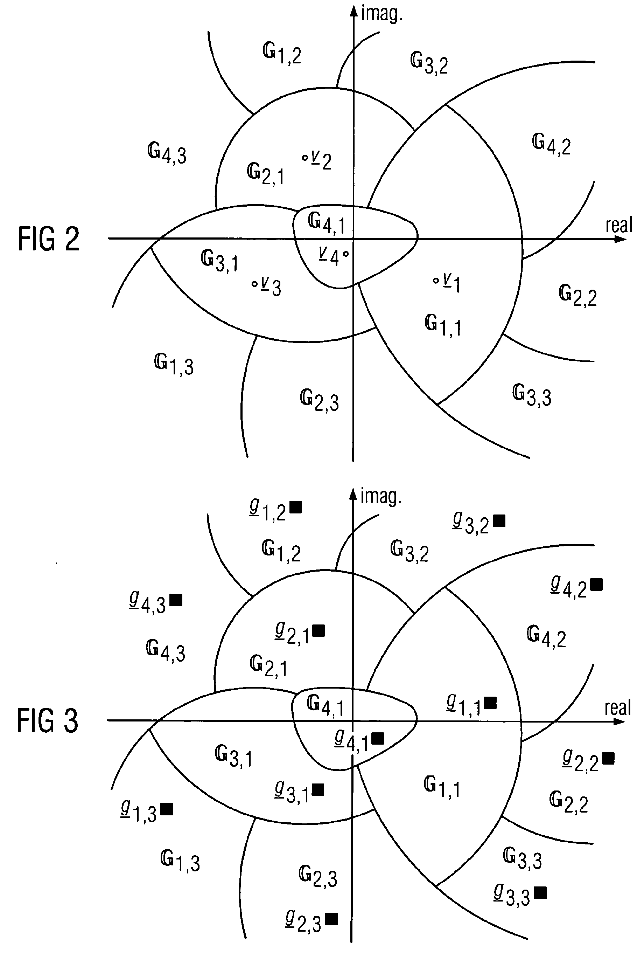

Dies ist in Figur 2 schematisch dargestellt. Die Menge $\mathbb{V}$ besteht in diesem Ausführungsbeispiel aus vier Informationseinheiten, $\mathbb{V} = \{\underline{v}_1, \underline{v}_2, \underline{v}_3, \underline{v}_4\}$, die in der komplexen Ebene durch kleine Kreise markiert sind. Dabei liegt die erste Informationseinheit $\underline{v}_1$ im Gebiet $\mathbb{G}_{.1,1}$, die zweite Informationseinheit $\underline{v}_2$ im Gebiet $\mathbb{G}_{.2,1}$, die dritte Informationseinheit $\underline{v}_3$ im Gebiet $\mathbb{G}_{.3,1}$ und die vierte Informationseinheit $\underline{v}_4$ im Gebiet $\mathbb{G}_{.4,1}$. Selbstverständlich ist es auch möglich, dass eine Informationseinheit mit Index i in einem Gebiet $\mathbb{G}_{.m,p}$ mit m≠i und/oder p≠1 liegt.

Liegt eines der Elemente des Schätzvektors $\underline{d}$ in einem der Gebiete $\mathbb{G}_{.1,1}$, $\mathbb{G}_{.2,1}$, $\mathbb{G}_{.3,1}$ oder $\mathbb{G}_{.4,1}$, so wird diesem Element die entsprechende Informationseinheit $\underline{v}_1, \underline{v}_2, \underline{v}_3$ oder $\underline{v}_4$ zugeordnet.

Auf diese Weise ergibt sich ein Empfangsvektor $\hat{\underline{d}}_{dis}$ mit diskreten Elementen $\hat{\underline{d}}_{dis,n}$, n = 1 ... N, die jeweils einer diskreten Informationseinheit aus $\mathbb{V}$ entsprechen:

$$\hat{\underline{d}}_{dis} = (\hat{\underline{d}}_{dis,1} \ \dots \ \hat{\underline{d}}_{dis,N})^{\mathsf{T}}$$

In Figur 2 sind noch weitere Gebiete mit den Bezugszeichen $\mathbb{G}_{.m,p}$ dargestellt, wobei jedem Gebiet in Abhängigkeit vom ersten Index m eine diskrete Informationseinheit aus $\mathbb{V}$ zugeordnet ist, d.h. m nimmt Werte von m = 1 ... M an. Der zweite Index p ist eine Durchnummerierung der Gebiete mit gleichem Index m und läuft von p = 1 ... P. In Figur 2 hat P den Wert 3, so dass der ersten Informationseinheit $\underline{v}_1$ die Gebiete $\mathbb{G}_{.1,1}$, $\mathbb{G}_{.1,2}$ und $\mathbb{G}_{.1,3}$, der zweiten Informationseinheit $\underline{v}_2$ die Gebiete $\mathbb{G}_{.2,1}$, $\mathbb{G}_{.2,2}$ und $\mathbb{G}_{.2,3}$, der dritten Informationseinheit $\underline{v}_3$ die Gebiete $\mathbb{G}_{.3,1}$, $\mathbb{G}_{.3,2}$ und $\mathbb{G}_{.3,3}$ und der vierten Informationseinheit $\underline{v}_4$ die Gebiete $\mathbb{G}_{.4,1}$, $\mathbb{G}_{.4,2}$ und $\mathbb{G}_{.4,3}$ zugeordnet sind. Selbstverständlich kann der Wert von P für unterschiedliche Werte von m auch verschieden sein.

Jedes Gebiet $\mathbb{G}_{.m,p}$ ist somit immer einer Informationseinheit $\underline{v}_m$ aus V zugeordnet. Man spricht von P-fach verbundenen Gebieten, da einer Informationseinheit immer ein Gesamtgebiet $\mathbb{G}_{.m}$ zugeordnet ist, das eine Vereinigungsmenge der insgesamt P zugehörigen Mengen $\mathbb{G}_{.m,p}$ ist.

$$\mathbb{G}_m = \mathbb{G}_{m,1} \cup \mathbb{G}_{m,2} \cdots \cup \mathbb{G}_{m,P}$$

Verwendet die Zuordnungsvorschrift einer Mobilstation nur einfach zusammenhängende Gebiete, d.h. ist P=1 und liegen die diskreten Informationseinheiten jeweils in einem dieser Gebiete, so wird nachfolgend von einer konventionellen Zuordnungsvorschrift ZV gesprochen. In allen anderen Fällen, d.h. für P > 1, wird die Zuordnungsvorschrift nachfolgend als unkonventionell bezeichnet.

In bekannten linearen empfängerorientierten Übertragungsverfahren die beispielsweise in P. W. Baier, W. Qiu, H. Tröger, C. A. Jötten, M. Meurer: "Modelling and optimization of receiver oriented multi-user MIMO downlinks for frequency selective channels." Proc. 10th International Conference on Telecommunications (ICT'03), vol.2, Papeete, 2003, S. 1547 - 1554, beschrieben werden, werden Sendesignale erzeugt die bestimmte Bedingungen in Bezug auf die erzeugten Intersymbolinterferenzen (ISI) und Mehrfachzugriffsinterferenzen (MAI) erfüllen, d.h. die Sendesignale sind so beschaffen, dass Interferenzen bei den empfangenden Mobilstationen ganz oder teilweise eliminiert werden. Diese Interferenzeliminierung wird durch das Anwenden von Zwangsbedingungen für jedes Sendesignal erreicht. Allerdings führt das Einhalten der Zwangsbedingungen zu einer unerwünschten Erhöhung der Sendeenergie eines Sendesignals verglichen mit der entsprechenden Sendeenergie in einem hinsichtlich der Sendeenergie optimierten Referenzsystem.

Die nachfolgend beschriebene und beispielsweise in dem Übertragungssystem aus Figur 1 eingesetzte Erfindung verwendet ein unkonventionelles Quantisierungsschema, d.h. eine unkonventionelle Zuordnungsvorschrift ZV in der wenigstens einen Mobilstation UE. Die Erfindung kann selbstverständlich sowohl für eine Übertragung der Realisierung $\underline{d}^{(R)}$ des Datenvektors $\underline{d}$ an eine einzelne Mobilstation als auch für eine Übertragung an mehrere Mobilstationen verwendet werden. Beispielsweise können einzelne Elemente der Realisierung $\underline{d}^{(R)}$ zum Übertragen an unterschiedliche Mobilstationen vorgesehen sein. Zum Ausführen der Erfindung muss die Basisstation NodeB die Übertragungseigenschaften des spezifischen Übertragungskanals jeder Mobilstation, die Zuordnungsvorschrift jeder Mobilstation und das jeweils verwendete Demodulationsverfahren, d.h. die jeweilige Demodulationsmatrix, kennen. Anhand der einzelnen Demodulationsmatrizen kann die Basisstation NodeB eine Gesamtdemodulationsmatrix bestimmen, während anhand der einzelnen Kanalmatrizen eine Gesamtkanalmatrix bestimmt werden kann.

In Figur 3 sind schematisch die gleichen Gebiete $\mathbb{G}_{m,p}$ im Werteraum des Demodulationsverfahrens der Mobilstation UE wie in Figur 2 dargestellt. Jedem der Gebiete $\mathbb{G}_{m,p}$ ist ein mit den gleichen Indizes versehener so genannter Repräsentant $g_{m,p}$ zugeordnet, wobei jeder der Repräsentanten $g_{m,p}$ einer Informationseinheit aus V zugeordnet ist. Den in diesem Ausführungsbeispiel verwendeten vier Informationseinheiten $\upsilon_1$, $\upsilon_2$, $\upsilon_3$ und $\upsilon_4$ sind jeweils drei Repräsentanten zugeordnet. Zur ersten Informationseinheit $\upsilon_1$ sind die Repräsentanten $g_{1,p}$, zur zweiten Informationseinheit $\upsilon_2$ die Repräsentanten $g_{2,p}$, zur dritten Informationseinheit $\upsilon_3$ die Repräsentanten $g_{3,p}$ und zur vierten Informationseinheit $\upsilon_4$ die Repräsentanten $g_{4,p}$ mit jeweils p = 1, 2 und 3 zugeordnet. Die Position eines Repräsentanten im Werteraum, d.h. der Wert eines Repräsentanten ist somit unabhängig von der Position der zugeordneten Informationseinheit im Werteraum.

Die Zuordnung von Repräsentanten zu Informationseinheiten erfolgt gemäß Figur 2 und Figur 3 derart, dass der Wert einer Informationseinheit mit keinem der Werte der ihr zugeordneten Repräsentanten übereinstimmt. In einem nicht dargestellten Ausführungsbeispiel liegt der Wert wenigstens einer Informationseinheit sogar in keinem der Gebiete der ihr zugeordneten Repräsentanten. Selbstverständlich kann der Wert einer Informationseinheit auch mit dem Wert eines der zugeordneten Repräsentanten übereinstimmen.

Gemäß der Erfindung werden die Elemente der zu übertragenden Realisierung $\underline{d}^{(R)}$ in eine Anzahl von G Gruppen unterteilt. Dabei gilt

$$\mathbb{N}_1 \subset \mathbb{N}_2 \cdots \subset \mathbb{N}_G = \mathbb{N} = \{1 \ldots N\}$$

wobei die minimale Kardinalität einer Gruppe 1 ist.

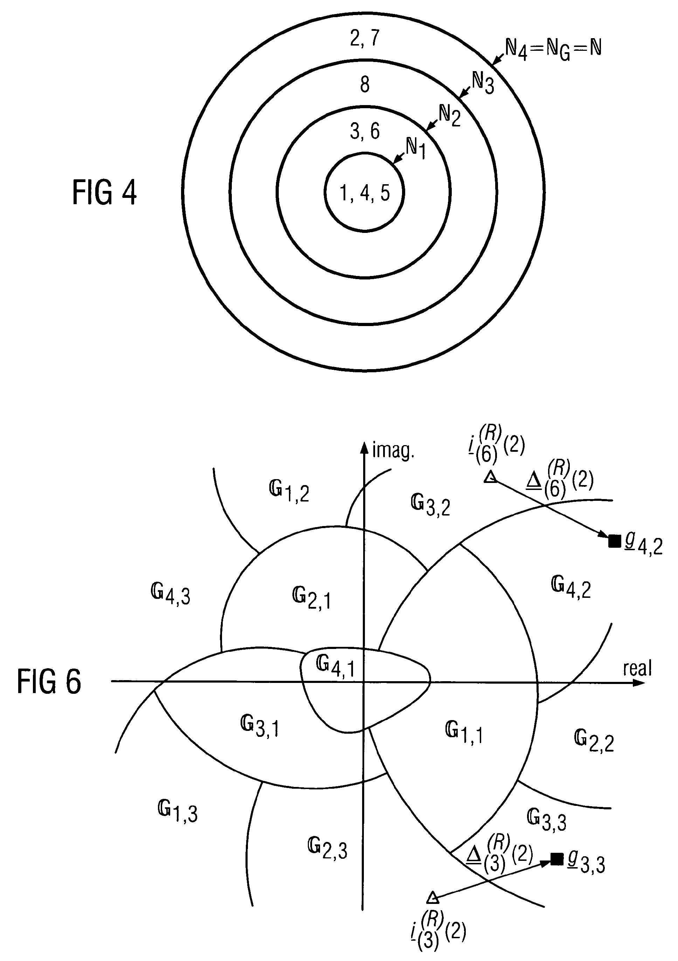

In Figur 4 ist die Gruppenbildung für das im Folgenden beschriebene Ausführungsbeispiel dargestellt. Die Realisierung $\underline{d}^{(R)}$ enthält acht Elemente $\underline{d}_n^{(R)}$, die in vier Gruppen eingeteilt werden. Dies bedeutet, dass N=8 und G=4 ist. Selbstverständlich ist die Erfindung auch mit beliebigen anderen Werten von N und G ausführbar. In der ersten Gruppe $\mathbb{N}_1$ sind die Elemente mit den Indizes n= 1, 4 und 5 enthalten. Die zweite Gruppe $\mathbb{N}_2$ besteht aus den Elementen der ersten Gruppe $\mathbb{N}_1$ zuzüglich der Elemente mit den Indizes n = 3 und 6. Die dritte Gruppe $\mathbb{N}_3$ besteht aus den Elementen der zweiten Gruppe $\mathbb{N}_2$ zuzüglich des Elements mit dem Index n = 8. Die vierte Gruppe $\mathbb{N}_4$ besteht aus allen Elementen $\underline{d}_n^{(R)}$ der Realisierung $\underline{d}^{(R)}$, d. h. zu den Elementen der dritten Gruppe $\mathbb{N}_3$ kommen noch die Elemente mit den Indizes n = 2 und 7 hinzu.

Der Basisstation NodeB aus Figur 1 ist das Demodulationsverfahren der Mobilstation UE, d.h. mathematisch betrachtet die Demodulationsmatrix $\underline{D}$, welche die Mobilstation UE verwendet bekannt. Die Demodulationsmatrix $\underline{D}$ ist beispielsweise dadurch bekannt, dass die Mobilstation UE sie der Basisstation NodeB signalisiert, oder dass die Basisstation NodeB der Mobilstation UE die Demodulationsmatrix $\underline{D}$ vorgibt. In gleicher Weise wie die Demodulationsmatrix $\underline{D}$ kann die von der Mobilstation UE verwendete Zuordnungsvorschrift ZV zu Basisstation signalisiert oder von der Basisstation vorgegeben werden. In den in beiden Fällen zwischen der Basisstation NodeB und der Mobilstation UE ausgetauschten Information kann die Zuordnungsvorschrift ZV sowohl implizit als auch explizit angegeben werden.

Zum Ermitteln eines in Bezug auf Interferenzen möglichst günstigen Gesamtsendesignals $\underline{t}^{(R)}$ zerlegt die Basisstation NodeB die ihr bekannte Demodulationsmatrix $\underline{D}$ (bei mehreren Mobilstationen die Gesamtdemodulationsmatrix) in G partielle Demodulationsmatrizen $\underline{D}_g$.

$$\underline{D}_g = \operatorname*{part}_{\mathbb{N}_g}(\underline{D}) \in \mathbb{C}^{|\mathbb{N}_g| \times Z}, \, g = 1 \ldots G$$

Dabei ergeben sich die partiellen Demodulationsmatrizen $\underline{D}_g$ aus der bekannten Demodulationsmatrix $\underline{D}$ durch Weglassen aller Zeilen, deren Zeilennummer $n \notin \mathbb{N}_g$ ist. Weiterhin gilt

$$\underline{D}_G = \underline{D}$$

Zum Erzeugen eines erfindungsgemäßes Gesamtsendesignal $\underline{t}^{(R)}$ werden außer den G partiellen Demodulationsmatrizen $\underline{D}_g$ auch G partielle Modulationsmatrizen $\underline{M}_g$ in der Sendeeinheit SE der Basisstation NodeB ermittelt.

Hierzu wird ein als TxZF-Operator (TxZF: Transmit Zero Forcing) bezeichneter Operator TxZF($\underline{X}$, $\underline{Y}$) verwendet, der beispielsweise in P. W. Baier et al.: "Modelling and optimization of receiver oriented multi-user MIMO downlinks for frequency selective channels." Proc. 10th International Conference on Telecommunications (ICT'03), vol.2, Papeete, 2003, S. 1547 - 1554, beschrieben wird.

$$\underline{Z} = TxZF(\underline{X}, \underline{Y}) = (\underline{X}\ \underline{Y})^H\ [\underline{X}\ \underline{Y}(\underline{X}\ \underline{Y})^H]^{-1}$$

Mit der der Basisstation NodeB ebenfalls bekannten Kanalmatrix $\underline{H}$, die die Übertragungseigenschaften des Übertragungskanals Ch beschreibt, und mit den G partiellen Demodulationsmatrizen $\underline{D}_g$ kann für jede partielle Demodulationsmatrix $\underline{D}_g$ eine partielle Modulationsmatrix $\underline{M}_g$ mit Hilfe des TxZF-Operators bestimmt werden:

$$\underline{M}_g = TxZF(\underline{D}_g, \underline{H}), \ g = 1...G$$

Die Spalten jeder partiellen Demodulationsmatrix $\underline{M}_g$ entsprechen den Elementen $\underline{d}_n^{(R)}$ des Datenvektors $\underline{d}^{(R)}$ mit $n \in \mathbb{N}_g$. Die Kanalmatrix kennt die Basisstation beispielsweise durch Empfang und Auswertung bekannter Signale von der Mobilstation UE. Selbstverständlich kann die Mobilstation UE den Übertragungskanal auch selbst ausmessen und das Ergebnis an die Basisstation NodeB signalisieren.

In Figur 5 sind die vier partiellen Modulationsmatrizen $\underline{M}_1, \underline{M}_2, \underline{M}_3, \underline{M}_4$, dieses Ausführungsbeispiels entsprechend der Gruppenbildung aus Figur 3 dargestellt. In der ersten partiellen Modulationsmatrix $\underline{M}_1$ sind die Spalten den Indizes 1, 4 und 5 zugeordnet, in der zweiten partiellen Modulationsmatrix $\underline{M}_2$ entsprechen die Spalten den Indizes 1, 3, 4, 5 und 6, in der dritten partiellen Modulationsmatrix $\underline{M}_3$ entsprechen die Spalten den Indizes 3, 4, 5, 6 und 8, während in der vierten partiellen Modulationsmatrix $\underline{M}_4$ alle Indizes von 1 bis 8 einer Spalte zugeordnet sind. Für je zwei unterschiedliche Matrizen $\underline{M}_g$ und $\underline{M}_{g'}$ mit $g \neq g'$ haben die Spalten, die zu einem bestimmten Index n gehören einen unterschiedlichen Inhalt. Dies ergibt sich daraus, dass beim Übergang von g-1 zu g alle Spalten von $\underline{M}_g$ und nicht nur diejenigen, die hinzugefügt werden, beim Übergang von g-1 nach g mittels der oben für $\underline{M}_g$ angegebenen Formel neu berechnet werden.

Ziel der erfindungsgemäßen Verfahrens ist die Ermittlung des Gesamtsendesignals $\underline{t}^{(R)}$ für die Realisierung $\underline{d}^{(R)}$. Erfindungsgemäß kann das Gesamtsendesignal $\underline{t}^{(R)}$ schrittweise in einem iterativen Prozess erzeugt werden, der G Schritte hat. In jedem Schritt wird ein Teilsendesignal $\underline{t}^{(R)}(g)$ erzeugt. Das Gesamtsendesignal $\underline{t}^{(R)}$ ergibt sich dann durch Aufsummieren der Teilsendesignale $\underline{t}^{(R)}(g)$.

$$\underline{t}^{(R)} = \sum_{g=1}^{G} \underline{t}^{(R)}(g)$$

Die Teilsendesignale $\underline{t}^{(R)}(g)$ jedes Iterationsschrittes werden durch die Schrittnummer g, die in Klammern gesetzt ist, ausgedrückt.

Zum Ermitteln der Teilsendesignale $\underline{t}^{(R)}(g)$ werden G partielle Datenvektoren $\underline{d}^{(R)}(g)$ für die Realisierung $\underline{d}^{(R)}$ folgendermaßen festgelegt:

$$\underline{d}^{(R)}(g) = \operatorname*{part}_{\mathbb{N}_g}\left(\underline{d}^{(R)}\right) \in \mathbb{V}^{|\mathbb{N}_g| \times 1}$$

Ein partieller Datenvektor $\underline{d}^{(R)}(g)$ ergibt sich aus der Realisierung $\underline{d}^{(R)}$ durch Weglassen aller Elemente $\underline{d}_n^{(R)}$ mit $n \notin \mathbb{N}_g$.

Bezüglich der für die Elemente der partiellen Datenvektoren vom Typ $\underline{d}^{(R)}(g)$ verwendeten Indizes werden zwei Schreibweisen eingeführt:

Schreibweise 1: Ein Index ohne Klammern bezeichnet eine Position innerhalb des partiellen Datenvektors $\underline{d}^{(R)}(g)$.
Schreibweise 2: Ein in Klammern gesetzter Index beschreibt die Zuweisung des dem Index entsprechenden Elements der Realisierung $\underline{d}^{(R)}$ zu dem entsprechenden Element des partiellen Datenvektors $\underline{d}^{(R)}(g)$.

Die beiden Schreibweisen werden nachfolgend entsprechend der Gruppenbildung aus Figur 4 für g=1 verdeutlicht.

Schreibweise 1: $\underline{\mathbf{d}}^{(R)}(1) = (\underline{d}^{(R)}{}_1(1),\ \underline{d}^{(R)}{}_2(1),\ \underline{d}^{(R)}{}_3(1))^\mathsf{T}$
Schreibweise 2: $\underline{\mathbf{d}}^{(R)}(1) = (\underline{d}^{(R)}{}_{(1)}(1),\ \underline{d}^{(R)}{}_{(4)}(1),\ \underline{d}^{(R)}{}_{(5)}(1))^\mathsf{T}$

Durch die beiden Schreibweisen wird somit beispielsweise ausgedrückt, dass der zweiten Position $\underline{d}_2{}^{(R)}(1)$ in $\underline{\mathbf{d}}^{(R)}(1)$ das Element mit n = 4 der Realisierung $\underline{\mathbf{d}}^{(R)}$ zugewiesen ist, d.h. es gilt $\underline{d}_2{}^{(R)}(1) = \underline{d}_{(4)}{}^{(R)}(1) \equiv \underline{d}_4{}^{(R)}$.

Dem ersten partiellen Datenvektor $\underline{\mathbf{d}}^{(R)}(1)$, d.h. dem partiellen Datenvektor $\underline{\mathbf{d}}^{(R)}(g)$ mit g=1, wird ein entsprechender erster partieller Korrekturvektor zugeordnet.

$$\underline{\Delta}^{(R)}(1) \in \mathbb{C}^{|\mathbb{N}_1| \times 1}$$

Die Elemente des ersten partiellen Korrekturvektors $\underline{\Delta}^{(R)}(1)$ sind diejenigen Repräsentanten $\underline{g}_{1,1}$, $\underline{g}_{2,1}$, $\underline{g}_{3,1}$ oder $\underline{g}_{4,1}$, die dem Ursprung des Koordinatensystems aus Figur 3 am nächsten liegen und die den Informationseinheiten entsprechen, die den Elementen des partiellen Datenvektors $\underline{\mathbf{d}}^{(R)}(1)$ jeweils zugeordnet sind. Für die Gruppenbildung gemäß Figur 4 ist beispielsweise mit

$$\underline{d}^{(R)}{}_1 = \underline{v}_3,\ \underline{d}^{(R)}{}_4 = \underline{v}_2,\ \underline{d}^{(R)}{}_5 = \underline{v}_1$$

der erste partielle Korrekturvektor $\underline{\Delta}^{(R)}(1)$

$$
\begin{aligned}
\underline{\Delta}^{(R)}(1) \;&=\; \left( \underline{\Delta}_1^{(R)}(1),\ \underline{\Delta}_2^{(R)}(1),\ \underline{\Delta}_3^{(R)}(1) \right)^{\mathbf{T}} \\
&=\; \left( \underline{\Delta}_{(1)}^{(R)}(1),\ \underline{\Delta}_{(4)}^{(R)}(1),\ \underline{\Delta}_{(5)}^{(R)}(1) \right)^{\mathbf{T}} \\
&=\; \left( \underline{g}_{3,1},\ \underline{g}_{2,1},\ \underline{g}_{1,1} \right)^{\mathbf{T}}
\end{aligned}
$$

Dies entspricht der anhand von Figur 3 beschriebenen Zuordnung von Repräsentanten zu Informationseinheiten.

Das erste Teilsendesignal $\underline{t}^{(R)}(1)$, d.h. das Teilsendesignal $\underline{t}^{(R)}(g)$ mit g=1, wird nun derart gebildet, dass sich beim Anwenden der ersten partiellen Demodulationsmatrix $\underline{D}_1$ auf das erste Teilsendesignal $\underline{t}^{(R)}(1)$ ein erstes partielles Signal $\underline{i}^{(R)}(1)$ ergibt, das gleich dem ersten partiellen Korrekturvektor $\underline{\Delta}^{(R)}(1)$ ist.

Diese Anforderung führt zusammen mit der ersten partiellen Modulatormatrix $\underline{M}_1$ zu folgender Berechnung des ersten Teilsendesignals $\underline{t}^{(R)}(1)$:

$$\underline{t}^{(R)}(1) = \underline{M}_1\ \underline{\Delta}^{(R)}(1)$$

Durch Multiplikation des so gebildeten ersten Teilsendesignals $\underline{t}^{(R)}(1)$ mit der ersten partiellen Demodulationsmatrix $\underline{D}_1$ ergibt den gewünschten Wert für das erste partielle Signal:

$$\underline{i}^{(R)}(1) = \underline{\Delta}^{(R)}(1)$$

Das Anwenden der zweiten partiellen Demodulationsmatrix $\underline{D}_2$ auf das erste Teilsendesignal $\underline{t}^{(R)}(1)$ ergibt ein zweites partielles Signal:

$$\underline{i}^{(R)}(2) = \underline{D}_2\ \underline{H}\ \underline{t}^{(R)}(1)$$

Allerdings entsprechen die Elemente des zweiten partiellen Signals $\underline{i}^{(R)}(2)$, deren Indizes einen Wert $n \in \mathbb{N}_1$ haben, den gewünschten Werten, während die anderen Elemente des zweiten partiellen Signals $\underline{i}^{(R)}(2)$ Interferenz repräsentieren.

Gemäß der Erfindung wird ein zweiter partiellen Korrekturvektors $\underline{\Delta}^{(R)}(2)$ in der Weise festgelegt, dass die Addition von zweitem partiellen Korrekturvektor $\underline{\Delta}^{(R)}(2)$ und zweitem partiellen Signal $\underline{\mathbf{i}}^{(R)}(2)$ bewirkt, dass die Elemente des zweiten partiellen Signals $\underline{\mathbf{i}}^{(R)}(2)$, mit Indizes $n \in N_2 \backslash N_1$, in diejenigen nächstgelegenen Repräsentanten transformiert werden, die jeweils der richtigen Informationseinheit zugeordnet sind.

Die Elemente von $\underline{\Delta}^{(R)}(2)$, die den Elementen von $\underline{\Delta}^{(R)}(1)$ entsprechen, d.h. diejenigen mit Indizes $n \in N_1$, werden auf Null gesetzt.

Die Addition der Elemente des zweiten partiellen Signals $\underline{\mathbf{i}}^{(R)}(2)$ und des zweiten partiellen Korrekturvektors $\underline{\Delta}^{(R)}(2)$ ist in Figur 6 gemäß der in Figur 4 dargestellten Gruppenbildung für den Fall abgebildet, dass

$$\underline{d}^{(R)}{}_3 = \underline{\upsilon}_3, \ \underline{d}^{(R)}{}_6 = \underline{\upsilon}_4$$

gilt. Figur 6 zeigt die Einteilung der komplexen Ebene in Gebiete gemäß Figur 3, wobei der Übersichtlichkeit halber nur zwei Repräsentanten dargestellt sind.

Das dem dritten bzw. dem sechsten Element der Realisierung $\underline{\mathbf{d}}^{(R)}$ entsprechende Element $\underline{\mathbf{i}}_{(3)}{}^{(R)}(2)$ bzw. $\underline{\mathbf{i}}_{(6)}{}^{(R)}(2)$ des zweiten partiellen Signals $\underline{\mathbf{i}}^{(R)}(2)$ liegt in Figur 6 im Gebiet $\mathbb{G}_{2,3}$ bzw. $\mathbb{G}_{3,2}$. Aus einer Berechnung der Basisstation NodeB ergibt sich, dass von denjenigen Repräsentanten, denen die dritte bzw. vierte Informationseinheit $\underline{\upsilon}_3$ bzw. $\underline{\upsilon}_4$ zugeordnet ist, der Repräsentant $\underline{g}_{4,2}$ bzw. $\underline{g}_{3,3}$ aus dem Gebiet $\mathbb{G}_{4,2}$ bzw. $\mathbb{G}_{3,3}$, der jeweils nächstgelegene Repräsentant ist. Nachfolgend wird das entsprechende Element $\underline{\Delta}_{(3)}{}^{(R)}(2)$ bzw. $\underline{\Delta}_{(6)}{}^{(R)}(2)$ des zweiten partiellen Korrekturvektors $\underline{\Delta}^{(R)}(2)$ so berechnet, dass es das entsprechende Element $\underline{\mathbf{i}}_{(3)}{}^{(R)}(2)$ bzw. $\underline{\mathbf{i}}_{(6)}{}^{(R)}(2)$ des zweiten partiellen Signals $\underline{\mathbf{i}}^{(R)}(2)$ auf den nächstgelegenen Repräsentanten $\underline{g}_{4,2}$ bzw. $\underline{g}_{3,3}$ transformiert.

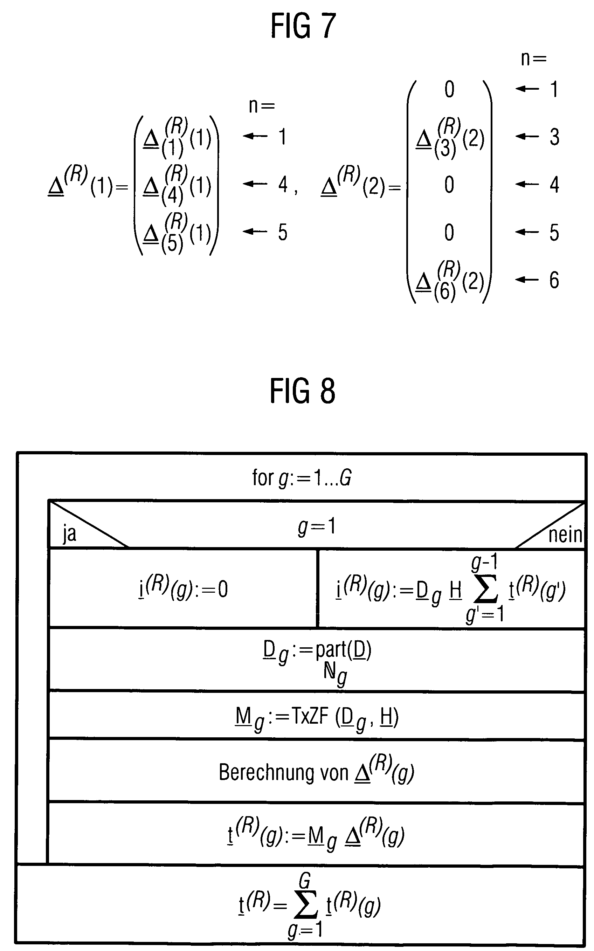

Die von der Basisstation NodeB, d.h. von der durch den Prozessor PR gesteuerten Sendeeinheit SE, für dieses Ausführungsbeispiel ermittelten ersten und zweiten partiellen Korrekturvektoren $\underline{\Delta}^{(R)}(1)$ und $\underline{\Delta}^{(R)}(2)$ sind in Figur 7 als Spaltenvektoren dargestellt. Jeder Zeile ist mit einem Pfeil eine Zahl zugeordnet, die verdeutlicht, welchem Element der Realisierung $\underline{\mathbf{d}}^{(R)}$, d.h. welchem Index n die jeweilige Zeile entspricht.

Anhand des mittels der oben genannten Kriterien berechneten zweiten partiellen Korrekturvektors $\underline{\Delta}^{(R)}(2)$ wird ein zweites Teilsendesignal $\underline{\mathbf{t}}^{(R)}(2)$ wie folgt berechnet:

$$\underline{\mathbf{t}}^{(R)}(2) = \underline{M}_2 \ \underline{\Delta}^{(R)}(2)$$

Die zuvor beschriebene Berechnung des ersten und zweiten Teilsendesignals $\underline{\mathbf{t}}^{(R)}(1)$ und $\underline{\mathbf{t}}^{(R)}(2)$ bewirkt, dass alle Informationseinheiten, die in dem zweiten partiellen Datenvektor $\underline{\mathbf{d}}^{(R)}(2)$ enthalten sind, bei einem Senden des ersten und zweiten Teilsendesignals $\underline{\mathbf{t}}^{(R)}(1)$ und $\underline{\mathbf{t}}^{(R)}(2)$ von der Mobilstation UE auf die richtigen Repräsentanten abgebildet werden. Dies ist gleichbedeutend damit, dass die Abbildung in die richtigen Gebiete des Werteraumes erfolgt. Mit Vorteil werden die ersten und zweiten partiellen Korrekturvektoren $\underline{\Delta}^{(R)}(1)$ und $\underline{\Delta}^{(R)}(2)$ durch das erfindungsgemäße Verfahren so gewählt, dass die ersten und zweiten Teilsendesignale $\underline{\mathbf{t}}^{(R)}(1)$ und $\underline{\mathbf{t}}^{(R)}(2)$ mit der kleinstmöglichen Energie gesendet werden, da die die ersten und zweiten partiellen Korrekturvektoren $\underline{\Delta}^{(R)}(1)$ und $\underline{\Delta}^{(R)}(R)(2)$, wie bereits erwähnt, die Repräsentanten der nächstgelegenen richtigen Gebiete verwenden.

Der iterative Prozess zum Ermitteln der Teilsendesignale $\underline{\mathbf{t}}^{(R)}(g)$, wie er für die ersten beiden Iterationsschritte beschrieben wurde, wird solange fortgeführt, bis alle Teilsendesignale $\underline{\mathbf{t}}^{(R)}(g)$, g = 1 ... G, bestimmt worden sind und aus ihnen das Gesamtsendesignal $\underline{\mathbf{t}}^{(R)}$ durch Aufsummieren gebildet werden kann.

Jeder partielle Korrekturvektor $\underline{\Delta}^{(R)}(g)$ so klein wie möglich gewählt und hängt ab von

- der Realisierung $\underline{\mathbf{d}}^{(R)}$ von $\underline{\mathbf{d}}$,

- der Zuordnungsvorschrift ZV, d.h. der Form der im Werteraum (der komplexen Ebene) festgelegten Gebiete sowie der Lage der Repräsentanten in dem jeweiligen Gebiet,

- und von g-1 partiellen Korrekturvektoren $\underline{\Delta}^{(R)}(g')$ mit g' = 1... (g-1), die bestimmt werden müssen, bevor der g-te partielle Korrekturvektor $\underline{\Delta}^{(R)}(g)$ bestimmt werden kann.

Der iterative Prozess zum Erzeugen der G Teilsendesignale $\underline{\mathbf{t}}^{(R)}(g)$ kann anschaulich auch anhand eines in Figur 8 dargestellten Nassi-Shneiderman Diagramms beschrieben werden. Derartige Diagramme werden beispielsweise in I. Nassi, B. Shneiderman: "Flowchart techniques for structured programming", ACM SIGPLAN Notices, vol. 8, 1973, S. 12 - 26, beschrieben.

Der iterative Prozess zum Erzeugen der G Teilsendesignale $\underline{\mathbf{t}}^{(R)}(g)$ garantiert, dass jedes Teilsendesignal $\underline{\mathbf{t}}^{(R)}$

(g) keinen Einfluss auf den Empfang von Elementen (Informationseinheiten) der partiellen Datenvektoren $\underline{d}^{(R)}(g')$ mit g'<g hat, d.h. für diese Elemente erzeugt das Teilsendesignal $\underline{t}^{(R)}(g)$ keine Interferenzen. Durch das Gesamtsendesignals $\underline{t}^{(R)}$ wird erreicht, dass alle Elemente $\underline{d}_n^{(R)}$ der Realisierung $\underline{d}^{(R)}$ jeweils den richtigen und energetisch günstigsten Repräsentanten und somit auch den richtigen Informationseinheiten zugeordnet werden.

An das erste Teilsendesignal $\underline{t}^{(R)}(1)$ wird die Bedingung gestellt, dass es sich um ein Sendesignal mit der minimalen Energie handelt, um das gewünschte Signal

$$\underline{d}^{(R)}(1) = \underline{\Delta}^{(R)}(1)$$

zu erreichen, während gleichzeitig die durch das erste Teilsendesignal $\underline{t}^{(R)}(1)$ erzeugte Interferenz mit den partiellen Datenvektoren $\underline{d}^{(R)}(g)$ mit g>1 nicht beachtet wird. Aus diesem Grund ist die Energieeffizienz von $\underline{t}^{(R)}(1)$ relativ hoch. Bei konventionellen Verfahren, die TxZF zum Erzeugen von Sendesignalen verwenden, würde diese Interferenz eliminiert werden. Dies ginge einher mit einer geringeren Energieeffizienz als der des ersten Teilsendesignals $\underline{t}^{(R)}(1)$. Verfahren mit TXZF und eine Definition für die Energieeffizienz von Sendesignalen sind beispielsweise in P. W. Baier et al.: "Modelling and optimization of receiver oriented multi-user MIMO downlinks for frequency selective channels." Proc. 10th International Conference on Telecommunications (ICT'03), vol.2, Papeete, 2003, S. 1547 - 1554, beschrieben.

Das zweite Teilsendesignal $\underline{t}^{(R)}(2)$ ist ein mit minimaler Energie gesendetes Signal mit der einschränkenden Bedingung, dass es keine Interferenz am Demodulatorausgang für Elemente mit dem Index $n \in \mathbb{N}_1$ erzeugen darf, während Interferenz am Demodulatorausgang für Elemente mit Indizes $n \in \mathbb{N}_G \backslash \mathbb{N}_2$ nicht berücksichtigt werden. Diese Bedingung zur Berechnung des zweiten Teilsendesignals $\underline{t}^{(R)}(2)$ ist somit strenger als dies bei der Berechnung des ersten Teilsendesignals $\underline{t}^{(R)}(1)$ der Fall ist. Aus diesem Grund ist üblicherweise die Energieeffizienz des zweiten Teilsendesignals $\underline{t}^{(R)}(2)$ geringer ist als die Energieeffizienz des ersten Teilsendesignals $\underline{t}^{(R)}(1)$.

An die vorhergehende Argumentation anknüpfend hat die Energieeffizienz der Teilsendesignale $\underline{t}^{(R)}(g)$ die Tendenz mit zunehmendem g abzunehmen.

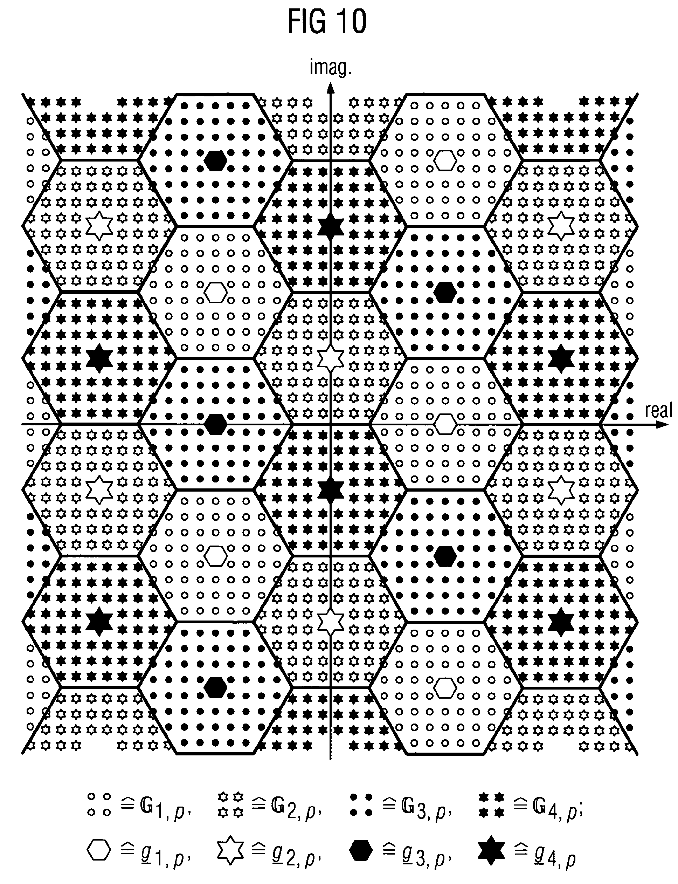

Zuvor wurde die Erfindung exemplarisch für eine Basisstation NodeB und eine empfangende Station UE, d. h. eine Mobilstation UE beschrieben. Die angegebenen Formeln und Vorgehensweisen sind jedoch in gleicher Weise anwendbar, wenn die Basisstation NodeB, wie in einem zweiten Funkkommunikationssystem in Figur 9 dargestellt, einen Datenvektor $\underline{c}$ mittels einer wenigstens zwei Antennen umfassenden Antennenvorrichtung AV an mehrere Mobilstationen gleichzeitig sendet, die daraufhin jeweils ein Empfangssignal mit je einer ebenfalls wenigstens zwei Antennen umfassenden Antennenvorrichtung AV1 ... AVK empfangen. Der Datenvektor $\underline{c}$ besteht aus K Teilvektoren $\underline{c}^{(k)}$ mit k = 1 ... K, wobei jeder Teilvektor zum Empfang durch eine Mobilstation UE_k vorgesehen ist. Der Basisstation NodeB sind für jede der Mobilstationen UE_k die entsprechenden Übertragungseigenschaften des jeweiligen Übertragungskanals $\underline{H}^{(k)}$ bekannt. Die gesamte Kanalmatrix $\underline{H}$ hat dann die Struktur

$$\underline{H} = (\underline{H}^{(1)T} \ ... \ \underline{H}^{(K)T})^T$$

An jeder Mobilstation UE_k wird jeweils ein Empfangssignals empfangen und mit einer individuellen Demodulationsmatrix $\underline{D}^{(k)}$ demoduliert. Durch eine beispielsweise für alle Mobilstationen gleiche Zuordnungsvorschrift wird von jeder Mobilstation UE_k ein diskreter Empfangsvektor $\underline{c}^{(k)}_{dis}$ gebildet. Alle Empfangsvektoren $\underline{c}^{(k)}_{dis}$ ergeben einen Gesamtempfangsvektor für das gesamte Übertragungssystem.

Selbstverständlich kann jede Mobilstation UE_k auch eine individuelle Zuordnungsvorschrift verwenden. Die aus den individuellen Demodulationsmatrizen $\underline{D}^{(k)}$ bestehende von der Basisstation bestimmte Gesamtdemodulationsmatrix $\underline{D}$ ist eine blockdiagonale Matrix.

$$\underline{D} = \text{blockdiag} (\underline{D}^{(1)} \ ... \ \underline{D}^{(K)})$$

Eine vorteilhafte Gruppenbildung für K Mobilstationen UE_k ergibt sich durch Berücksichtigung der Teilvektoren $\underline{c}^{(k)}$. D.h. die Gruppenbildung wird nach Mobilstationen durchgeführt. Eine erste Gruppe B1 besteht aus den Elementen des für die erste Mobilstation UE_1 bestimmten ersten Teildatenvektors $\underline{c}^{(1)}$ und eine zweite Gruppe B2 besteht aus den Elementen der ersten Gruppe B1 und den für die zweite Mobilstation UE_2 bestimmten Elementen des zweiten Teildatenvektoren $\underline{c}^{(2)}$. Eine Gruppe Bi somit aus den Elementen aller Teildatenvektoren $\underline{c}^{(i')}$, d.h. aller Mobilstationen UE_i' mit i' = 1 ... i. Das zuvor ,anhand der Figuren 1 bis 8 mit den Variablen g und G beschriebene Verfahren ergibt sich also am Beispiel von K Mobilstationen UE_k aus Figur 9 durch das Ersetzen von g durch k und G durch K.

Die Kanaldämpfung auf den Übertragungskanälen zwischen der Basisstation NodeB und den Mobilstationen UE_k kann signifikant unterschiedlich sein. Der Grund liegt in den unterschiedlichen Distanzen zwischen der Basisstation NodeB und den Mobilstationen UE_k und in der unterschiedlichen Abschattung der Mobilstationen UE_k. Die absoluten Werte der Elemente der Kanalmatrizen $\underline{H}^{(k)}$ der Mobilstationen UE_k können sich somit um viele Größenordnungen unterscheiden.

Ein mögliches Maß für die absoluten Werte der Elemente einer Kanalmatrizen $\underline{H}^{(k)}$ ist die spektrale Norm von $\underline{H}^{(k)}$. Ist $\rho(\underline{H}^{(k)H}\underline{H}^{(k)})$ der größte Eigenwert der Matrix $\underline{H}^{(k)H}\underline{H}^{(k)}$,

$$\left\|\underline{H}^{(k)}\right\|_2 = \sqrt{\rho(\underline{H}^{(k)H}\underline{H}^{(k)})}$$

werden die K Mobilstationen UE_k derart gruppiert, dass gilt

$$\left\|\underline{H}^{(1)}\right\|_2 \leq \left\|\underline{H}^{(2)}\right\|_2 \leq ... \leq \left\|\underline{H}^{(K)}\right\|_2$$

Durch diese Gruppierung der Mobilstationen UE_k nimmt die Energie der Teilsendesignale $\underline{t}^{(R)}(k)$ mit zunehmendem k ab. Auf der anderen Seite nimmt gleichzeitig die Energieeffizienz des Teilsendesignals $\underline{t}^{(R)}(k)$ aufgrund des iterativen Erzeugungsprozesses mit zunehmendem k ab. Dies bedeutet, dass durch das erfindungsgemäße Gruppieren der Mobilstationen UE_k besonders diejenigen Teilsendesignale $\underline{t}^{(R)}(k)$ eine hohe Energieeffizienz haben, die aufgrund einer starken Kanaldämpfung auch mit großen Energien gesendet werden müssen. Aus diesem Grund ist die in dem erfindungsgemäßen Verfahren für das Gesamtsendesignal $\underline{t}^{(R)}$ benötigte Sendeenergie deutlich kleiner als bei einem konventionellen TxZF-Verfahren.

Besonders vorteilhaft ist es weiterhin für das erfindungsgemäße Verfahren, wenn die Bereiche, in denen die Repräsentanten liegen, eine hexagonale Struktur aufweisen, d.h. lückenlos aneinander grenzen.

Dies ist schematisch in Figur 10 für vier L-fach zusammenhängende Gebiete $\mathbb{G}_m$ dargestellt. Die einzelnen Sechsecke sind mit $\mathbb{G}_{m,p}$ mit m = 1, 2, 3 oder 4 und p= 1 ... L bezeichnet. In jedem der Sechsecke $\mathbb{G}_{m,p}$ befindet sich zentral ein Repräsentant $\underline{g}_{m,p}$, der jeweils einer Informationseinheit zugeordnet ist. In diesem Beispiel gibt es vier Informationseinheiten, die jeweils P Repräsentanten zugeordnet sind. Aus Gründen der Übersichtlichkeit sind nicht alle 4*P Gebiete des Werteraumes dargestellt. Durch die an den Rändern des Koordinatensystems nur ausschnittweise dargestellten Sechsecke soll jedoch die entsprechende Fortsetzung der Sechseckstruktur über den dargestellten Bereich hinaus zum Ausdruck gebracht werden.

**Patentansprüche**

1. Verfahren zum Betrieb einer sendenden Station (NodeB) in einem Funkkommunikationssystem, bei dem

   - die sendende Station (NodeB) wenigstens drei Informationseinheiten ($\underline{d}^{(R)}$; $\underline{c}$) zum gleichzeitigen Senden an wenigstens eine empfangende Station (UE; UE_1, ..., UE_K) über wenigstens einen Übertragungskanal (Ch) vorsieht,
   - die sendende Station (NodeB) über eine Information verfügt, der entnehmbar ist,

     • welches Demodulationsverfahren ($\underline{D}$; $\underline{D}^{(1)}, ..., \underline{D}^{(K)}$) die empfangende Station (UE; UE_1, ..., UE_K) für Empfangssignale verwendet,
     • welche Zuordnungsvorschrift (ZV) die empfangende Station (UE; UE_1, ..., UE_K) verwendet, um einem Empfangssignal eine Informationseinheit ($\underline{d}_{dis}$; $\underline{c}^{(1)}_{dis}$, ..., $\underline{c}^{(K)}_{dis}$) zuzuordnen, und
     • welche Übertragungseigenschaften ($\underline{H}$; $\underline{H}^{(k)}$) der Übertragungskanal hat,

   - die sendende Station (NodeB) die wenigstens drei Informationseinheiten ($\underline{d}^{(R)}$; $\underline{c}$) in wenigstens zwei Gruppen ($N_1$, $\mathbb{N}_2$, $\mathbb{N}_3$, $\mathbb{N}_4$; B1, B2, ..., BK) einteilt, wobei wenigstens eine der Gruppen mehr als eine Informationseinheit enthält,
   - die sendende Station (NodeB) unter Berücksichtigung der Information ($\underline{D}$, ZV, $\underline{H}$; $\underline{D}^{(1)}$, ..., $\underline{D}^{(K)}$, ZV, $\underline{H}^{(k)}$) für jede Gruppe ($\mathbb{N}_1$, $\mathbb{N}_2$, $\mathbb{N}_3$, $\mathbb{N}_4$; B1, B2, ..., BK) ein Teilsendesignal ($\underline{t}^{(R)}(g)$) ermittelt, und
   - die sendende Station (NodeB) ein Gesamtsendesignal ($\underline{t}^{(R)}$) aus den Teilsendesignalen ($\underline{t}^{(R)}(g)$) bildet und an die wenigstens eine empfangende Station (UE; UE_1, ..., UE_K) sendet.

2. Verfahren nach Anspruch 1, bei dem

bei der Gruppenbildung eine Zuordnung von Informationseinheiten ($\underline{c}^{(1)}$, ..., $\underline{c}^{(K)}$) zu empfangenden Stationen (UE_1, ..., UE_K) berücksichtigt wird.

3. Verfahren nach einem der vorstehenden Ansprüche, bei dem die Zuordnungsvorschrift (ZV) für mindestens eine Informationseinheit ($\underline{d}^{(R)}$; $\underline{c}$) wenigstens zwei Gebiete ($\mathbb{G}_{1,1}$, $\mathbb{G}$ $\mathbb{G}_{1,2}$, $\mathbb{G}_{1,3}$, ..., $\mathbb{G}_{4,1}$, $\mathbb{G}_{4,2}$, $\mathbb{G}_{4,3}$) eines Werteraumes verwendet, in dem Empfangssignale nach Durchführung des Demodulationsverfahrens ($\underline{D}$; $\underline{D}^{(1)}$, ..., $\underline{D}^{(K)}$) liegen.

4. Verfahren nach einem der vorstehenden Ansprüche, bei dem die Teilsendesignale ($\underline{t}^{(R)}(g)$) iterativ ermittelt werden und zum Ermitteln eines Teilsendesignals ($\underline{t}^{(R)}(g)$) bei vorhergehenden Iterationsschritten ermittelte Teilsendesignale ($\underline{t}^{(R)}(g)$) berücksichtigt werden.

5. Verfahren nach einem der vorstehenden Ansprüche, bei dem die Gebiete ($\mathbb{G}_{1,p}$, $\mathbb{G}_{2,p}$, $\mathbb{G}_{3,p}$, $\mathbb{G}_{4,p}$,) des Werteraumes aus lückenlos aneinandergrenzenden Sechsecken gebildet werden.

6. Verfahren nach einem der vorstehenden Ansprüche, bei dem die Teilsendesignale ($\underline{t}^{(R)}(g)$) derart gebildet werden, dass gegenseitige Interferenzen der jeweils übertragenen Informationseinheiten ($\underline{d}^{(R)}$; $\underline{c}^{(1)}$, ... , $\underline{c}^{(K)}$) berücksichtigt werden.

7. Verfahren nach einem der vorstehenden Ansprüche, bei dem das Gesamtsendesignal ($\underline{t}^{(R)}$) derart gebildet wird, dass gegenseitige Interferenzen der Teilsendesignale ($\underline{t}^{(R)}(g)$) berücksichtigt werden.

8. Verfahren nach einem der vorstehenden Ansprüche, bei dem die sendende Station (NodeB) der wenigstens einen empfangenden Station (UE; UE_1, ..., UE_K) das zu verwendende Demodulationsverfahren ($\underline{D}$; $\underline{D}^{(1)}$, ..., $\underline{D}^{(K)}$) signalisiert.

9. Verfahren nach einem der Ansprüche 1 bis 7, bei dem der sendenden Station (NodeB) von der wenigstens einen empfangenden Station (UE; UE_1, ..., UE_K) signalisiert wird, welches Demodulationsverfahren ($\underline{D}$; $\underline{D}^{(1)}$, ..., $\underline{D}^{(K)}$) die empfangende Station verwendet.

10. Verfahren nach einem der vorstehenden Ansprüche, bei dem die sendende Station (NodeB) und/oder die empfangende Station (UE_1, ..., UE_K) jeweils eine Antennenvorrichtung (AV, AV1, ..., AVK) mit zumindest zwei Antennen verwenden.

11. Sendende Station (NodeB) für einen Funkkommunikationssystem,

   - mit Mitteln (SE) zum gleichzeitigen Senden von wenigstens drei Informationseinheiten ($\underline{d}^{(R)}$; $\underline{c}$) an wenigstens eine empfangende Station (UE; UE_1, ..., UE_K) über wenigstens einen Übertragungskanal (Ch),
   - mit Mitteln (SE) zum Speichern einer Information ($\underline{D}$, ZV, $\underline{H}$; $\underline{D}^{(1)}$, ..., $\underline{D}^{(K)}$, ZV, $\underline{H}^{(k)}$), der entnehmbar ist,

      • welches Demodulationsverfahren ($\underline{D}$; $\underline{D}^{(1)}$, ..., $\underline{D}^{(K)}$) die empfangende Station (UE; UE_1, ..., UE_K) für Empfangssignale verwendet,
      • welche Zuordnungsvorschrift (ZV) die empfangende Station (UE; UE_1, ..., UE_K) verwendet, um einem Empfangssignal eine Informationseinheit ($\underline{d}_{dis}$; $\underline{c}^{(1)}_{dis}$, ..., $\underline{c}^{(K)}_{dis}$) zuzuordnen, und
      • welche Übertragungseigenschaften ($\underline{H}$; $\underline{H}^{(k)}$) der Übertragungskanal hat,

   - mit Mitteln (SE) zum Einteilen der wenigstens drei Informationseinheiten ($\underline{d}^{(R)}$; $\underline{c}$) in wenigstens zwei Gruppen ($\mathbb{N}_1$, $\mathbb{N}_2$, $\mathbb{N}_3$, $\mathbb{N}_4$; B1, B2, ..., BK), wobei wenigstens eine der Gruppen mehr als eine Informationseinheit enthält,
   - mit Mitteln (SE) zum Ermitteln eines Teilsendesignals ($\underline{t}^{(R)}(g)$) für jede Gruppe ($\mathbb{N}_1$, $\mathbb{N}_2$, $\mathbb{N}_3$, $\mathbb{N}_4$; B1, B2, ..., BK) unter Berücksichtigung der Information ($\underline{D}$, ZV, $\underline{H}$; $\underline{D}^{(1)}$, ..., $\underline{D}^{(K)}$, ZV, $\underline{H}^{(k)}$), und
   - mit Mitteln (SE) zum Bilden eines Gesamtsendesignal ($\underline{t}^{(R)}$) aus den Teilsendesignalen ($\underline{t}^{(R)}(g)$) und mit Mitteln (SE) zum Senden des Gesamtsendesignals ($\underline{t}^{(R)}$) an die wenigstens eine empfangende Station (UE; UE_1, ..., UE_K).

# FIG 1

NodeB

SE

Ch

UE

$\underline{d}^{(R)}$

$\underline{t}$

$\underline{n}$

$\underline{e}$

$\underline{r}$

$\hat{\underline{d}}$

$\hat{\underline{d}}_{dis}$

M

PR

H

D

ZV

# FIG 5

n=

$\underline{M}_1$

1 4 5

$\underline{M}_2$

1 3 4 5 6

$\underline{M}_3$

1 3 4 5 6 8

$\underline{M}_4$

1 2 3 4 5 6 7 8

# FIG 9

$\underline{n}$

AV1

UE_1

ZV

$\underline{c} = \begin{bmatrix} \underline{c}^{(1)} \\ \vdots \\ \underline{c}^{(K)} \end{bmatrix}$

NodeB

AV

$\underline{M}_g$

Funk-schnitt-stelle

$\underline{D}^{(1)}$

$\underline{t}^{(R)}$

$\underline{H}^{(k)}$

AVK

$\underline{D}^{(K)}$

UE_K

ZV

$\begin{bmatrix} \hat{\underline{c}}_{dis}^{(1)} \\ \vdots \\ \hat{\underline{c}}_{dis}^{(K)} \end{bmatrix} = \hat{\underline{c}}_{dis}$

FIG 2

FIG 3

FIG 4

FIG 6

## FIG 7

$$\underline{\Delta}^{(R)}(1)=\begin{pmatrix}\underline{\Delta}_{(1)}^{(R)}(1)\\[4pt]\underline{\Delta}_{(4)}^{(R)}(1)\\[4pt]\underline{\Delta}_{(5)}^{(R)}(1)\end{pmatrix}\begin{matrix}n=\\\leftarrow 1\\\leftarrow 4\,,\\\leftarrow 5\end{matrix}\qquad \underline{\Delta}^{(R)}(2)=\begin{pmatrix}0\\[4pt]\underline{\Delta}_{(3)}^{(R)}(2)\\[4pt]0\\[4pt]0\\[4pt]\underline{\Delta}_{(6)}^{(R)}(2)\end{pmatrix}\begin{matrix}n=\\\leftarrow 1\\\leftarrow 3\\\leftarrow 4\\\leftarrow 5\\\leftarrow 6\end{matrix}$$

## FIG 8

| for $g:=1...G$ | |
|---|---|
| $g=1$ | |
| ja | nein |
| $\underline{i}^{(R)}(g):=0$ | $\underline{i}^{(R)}(g):=\underline{D}_g\,\underline{H}\sum\limits_{g'=1}^{g-1}\underline{t}^{(R)}(g')$ |
| $\underline{D}_g:=\underset{\mathbb{N}_g}{part(\underline{D})}$ | |
| $\underline{M}_g:=TxZF\,(\underline{D}_g,\underline{H})$ | |
| Berechnung von $\underline{\Delta}^{(R)}(g)$ | |
| $\underline{t}^{(R)}(g):=\underline{M}_g\,\underline{\Delta}^{(R)}(g)$ | |
| $\underline{t}^{(R)}=\sum\limits_{g=1}^{G}\underline{t}^{(R)}(g)$ | |

# FIG 10

$$\begin{array}{c} \circ\ \circ \\ \circ\ \circ \end{array} \hat{=} \mathbb{G}_{1,p}, \quad \begin{array}{c} \stackrel{\star}{\star}\ \stackrel{\star}{\star} \\ \end{array} \hat{=} \mathbb{G}_{2,p}, \quad \begin{array}{c} \bullet\ \bullet \\ \bullet\ \bullet \end{array} \hat{=} \mathbb{G}_{3,p}, \quad \begin{array}{c} \star\ \star \\ \star\ \star \end{array} \hat{=} \mathbb{G}_{4,p};$$

$$\hexagon \hat{=} \underline{g}_{1,p}, \quad \star \hat{=} \underline{g}_{2,p}, \quad \hexagon\!\!\!\bullet \hat{=} \underline{g}_{3,p}, \quad \bigstar \hat{=} \underline{g}_{4,p}$$

**Europäisches Patentamt**

# EUROPÄISCHER RECHERCHENBERICHT

Nummer der Anmeldung

EP 03 02 7734

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | BAIER P W ET AL: "Modelling and optimization of receiver oriented multi-user MIMO downlinks for frequency selective channels" ICT'2003. CONFERENCE PROCEEDINGS, PAPEETE, TAHITI, FRENCH POLYNESIA, 23 FEB.-1 MARCH 2003, Bd. 2, 23. Februar 2003 (2003-02-23), Seiten 1547-1554, XP010638026 IEEE, PISCATAWAY, USA * Abschnitt IV * ----- | 1-11 | H04L5/14 H04L25/03 |
| A | WO 03/094460 A (ERICSSON INC) 13. November 2003 (2003-11-13) * Absatz [0007] * * Absatz [0016] - Absatz [0017] * ----- | 1-11 | |

RECHERCHIERTE SACHGEBIETE (Int.Cl.7)

H04L

Der vorliegende Recherchenbericht wurde für alle Patentansprüche erstellt

| Recherchenort | Abschlußdatum der Recherche | Prüfer |
|---|---|---|
| Den Haag | 9. Juli 2004 | Orozco Roura, C |

EPO FORM 1503 03.82 (P04C03)

**EP 1 538 774 A1**